# EUROPÄISCHE PATENTANMELDUNG

(11) **EP 1 293 920 A1**
(43) Veröffentlichungstag der Anmeldung: **19.03.2003**
(21) Anmeldenummer: 02018613.6
(22) Anmeldetag: 20.08.2002
(51) Int. Cl.: G06F 17/60

(54) **Verfahren und Vorrichtung zum Vertrieb von Produkten und/ oder damit verbundener Dienstleistungen**

(30) Priorität: 12.09.2001 DE 10144984; 06.11.2001 DE 10154336; 07.12.2001 DE 10160099
(71) Anmelder: Volkswagen Aktiengesellschaft, 38436 Wolfsburg (DE)
(72) Erfinder: Engels, Emmerich, 64546 Mörfelden-Walldorf (DE); Maiwald, Peter, 63303 Dreieich-Buchschlag (DE); Wirth, Thomas, Dr., 38104 Braunschweig (DE); Santelmann, Lars-Henner, 31224 Peine (DE); Müller, Thorsten, 38446 Wolfsburg (DE)

(57) **Zusammenfassung**

Die Erfindung betrifft in Verfahren und eine Vorrichtung zum Vertrieb und/oder damit verbundener Dienstleistungen von Produkten, insbesondere von Kraftfahrzeugen, umfassend mindestens einen Hersteller (2) des Produktes und eine Anzahl von Vertriebspartnern (3-5) des Herstellers (2), mittels mindestens eines Kommunikationsnetzwerkes (13) zwischen dem Hersteller (2) und den einzelnen Vertriebspartnern (3-5), wobei die Dienstleistungen modular aufgeteilt sind und den einzelnen Vertriebspartnern (3-5) mindestens ein Dienstleistungs-Modul zugeordnet ist, wobei die den einzelnen Vertriebspartnern (3-5) zugeordneten Dienstleistungs-Module auf einer dem Hersteller (2) zugeordneten zentralen Einrichtung (2a) abgelegt sind, die zentrale Einrichtung (2a) in Abhängigkeit von dem zugeordneten Dienstleistungs-Modul den Vertriebspartner (3-5) über das Kommunikationsnetzwerk (13) Informationen überträgt und von diesen Informationen zu durchgeführten Dienstleistungen erhält, wobei in der zentralen Einrichtung (2a) die übertragenen, durchgeführten Dienstleistungen mit Sollvorgaben des jeweiligen Dienstleistungs-Moduls verglichen werden.

## Beschreibung

Die Erfindung betrifft ein Verfahren und eine Vorrichtung zum Vertrieb und/oder damit verbundener Dienstleistungen von Produkten, insbesondere von Kraftfahrzeugen.

Die derzeit bekannten Vertriebssysteme von hochwertigen Produkten wie beispielsweise Kraftfahrzeuge sind relativ starr, so dass häufig für Kunden, Vertriebspartner und Hersteller die Situation nicht befriedigend ist. Dabei existieren exklusive Vertragshändlerverträge zwischen dem Vertriebspartner und dem Hersteller, die den Vertriebspartner berechtigen, aber auch verpflichten, ein ganzes Bündel von Dienstleistungen anzubieten. Ein weiteres Merkmal dieser Vertriebssysteme ist, dass diese den einzelnen Händlern einen begrenzten Gebietsschutz gewähren. Dies schützt zwar die Investition des einzelnen Vertriebspartners, stellt jedoch gleichzeitig eine gewisse Barriere für die anderen dar, so dass sich das Vertriebssystem bei sich ändernden Marktsituationen nicht schnell genug anpassen kann.

Aus der US-Patentschrift US 5,960,411 ist ein Verfahren und eine Vorrichtung zum Tätigen von Käufen über ein Kommunikationsnetzwerk bekannt. Bei dem beschriebenen Verfahren sendet der potentielle Kunde über eine Terminaleinrichtung eine Warenbestellung an einen Zentralserver. Die Bestellung enthält eine Kundenidentifikation und Informationen über die Zahlungs- und Versendungsart. Der Zentralserver weist dem Käufersystem eine Käuferidentifikation zu, verknüpft diese mit der Bestellung und sendet die Käuferidentifikation mit einem HTML-Dokument, das einen Bestell-Button enthält, an das Kundenterminal. Über die Anwahl des Bestell-Buttons sendet der Käufer eine definitive Bestellung an den Zentralserver zur Annahme.

Ein derartiges Verfahren ist in der Regel für Kraftfahrzeuge aus verschiedenen Gründen nicht geeignet. Neben rechtlichen Schwierigkeiten werden Kraftfahrzeuge häufig über Kredite finanziert und können nicht wie kleinere Produkte einfach versendet werden.

Weiterhin ist unter www.scanmarket.de/scandicar/index/handling/carconfig.htm (23.03.2001) ein Car-Konfigurator bekannt, bei dem über eine Terminaleinrichtung Fahrzeuge nach Marke, Modell und Ausstattungsoptionen konfiguriert werden können. Zusätzlich kann der Zahlungswunsch angegeben werden. Bei Übersendung dieser Daten zusammen mit einer Kundenidentifizierung an den Zentralserver wird vom Anbieter ein verbindliches Angebot erstellt und dem Kunden auf dem Postweg zugesandt.

Der Erfindung liegt daher die technische Aufgabe zugrunde, ein Verfahren und eine Vorrichtung zum Vertrieb und/oder damit verbundener Dienstleistungen von Produkten, insbesondere von Kraftfahrzeugen zu schaffen, die besser auf die Bedürfnisse von Kunden, Vertriebspartnern und Herstellern angepasst sind.

Die Lösung des Problems ergibt sich durch die Gegenstände mit den Merkmalen der Patentansprüche 1, 21, 41 und 42. Weitere vorteilhafte Ausgestaltungen der Erfindung ergeben sich aus den Unteransprüchen.

Hierzu sind zunächst der oder die Hersteller und die Vertriebspartner über ein elektronisches Kommunikationsnetzwerk miteinander verbunden, wobei dem oder den Herstellern eine zentrale Einrichtung, bestehend aus einem oder mehreren Servern, und den einzelnen Vertriebspartnern dezentrale Terminaleinrichtungen (clients) zugeordnet sind. Unter dem Hersteller sind sowohl ein oder mehrere Hersteller direkt oder eine Vertriebsorganisation des Herstellers oder mehrerer Hersteller zu verstehen. Dabei können die Terminaleinrichtungen als Work Stations oder andere Rechnereinheiten ausgebildet sein. Auch soll eine direkte elektronische Kommunikation zwischen den Vertriebspartnern nicht ausgeschlossen sein. Das Kommunikationsnetzwerk kann dabei als Intranet oder als offenes Netzwerk wie beispielsweise das Internet ausgebildet sein. Andere elektronische Kommunikationsnetzwerke sind denkbar. Bei offenen Netzwerken sind nur die bekannten Sicherheitsmaßnahmen zum Schutz vor unberechtigten Zugriffen zu beachten. Die mit dem Vertrieb verbundenen Vertriebs- und/oder Dienstleistungen werden in Vertriebs- und/oder Dienstleistungsmodule unterteilt, wobei den Vertriebspartnern mindestens ein Vertriebs- und/oder Dienstleistungsmodul zugeordnet ist, wobei jedoch ein Vertriebspartner mehr und im Extremfall alle Vertriebs- und/oder Dienstleistungsmodule zugeordnet bekommen kann. Zugeordnet bedeutet dabei, dass der Hersteller mit dem Vertriebspartner entsprechende Verträge über diese Vertriebsund/oder Dienstleistungsmodule abschließt. Die Daten der Vertriebspartner und die Daten der ihnen zugeordneten Vertriebs- und/oder Dienstleistungsmodule sind dann in der zentralen elektronischen Einrichtung des Herstellers elektronisch abgelegt. In der zentralen Einrichtung sind von den Vertriebspartnern benötigte Daten wie beispielsweise Reparaturanleitungen, Handbücher, Diagnosetools, Ersatzteillisten, updates etc. abgelegt, die den einzelnen Vertriebspartnern in Abhängigkeit des zugeordneten Vertriebs- und/oder Dienstleistungsmoduls automatisch übertragen werden oder von diesen elektronisch abrufbar sind. Des weiteren übertragen die Vertriebspartner über die dezentralen Terminaleinrichtungen elektronisch Informationsdaten zu den durchgeführten Vertriebs- und/oder Dienstleistungen an die zentrale Einrichtung, wobei in der zentralen Einrichtung die übertragenen Daten der durchgeführten Vertriebs- und/oder Dienstleistungen mit Daten von Sollvorgaben der jeweiligen Vertriebs- und/oder Dienstleistungsmodule verglichen werden. Dieses System bietet für alle Beteiligten eine erhebliche Anzahl von Vorteilen. Durch die modulare Aufteilung der Vertriebs- und/oder Dienstleistungen müssen die Vertriebspartner nur die Vertriebs- und Dienstleistungen erfüllen, für die sie sich ausreichend qualifiziert halten bzw. für die sie geeignetes Personal zur Verfügung haben. Der Hersteller kann hingegen elektronisch überprüfen, ob der einzelne Vertriebspartner in seinen Vertriebs- und/oder Dienstleistungsmodulen ausreichend qualifizierte Vertriebs- und/oder Dienstleistungen anbietet und gegebenenfalls einzelne Vertriebs- und/oder Dienstleistungsmodule bei Schlechterfüllung kündigen und einem anderen Vertriebspartner zuordnen. Beispielsweise ist es im Bereich von Kraftfahrzeugen nicht selten, dass ein Vertriebspartner ein sehr guter Verkäufer ist, aber im Bereich Service- und Reparaturangelegenheiten nicht zufriedenstellende Ergebnisse für den Kunden abliefert und umgekehrt. Die Ursachen können dabei unterschiedlicher Natur sein, sind jedoch für den Kunden störend. Vereinfacht ausgedrückt macht jeder Vetriebspartner nur das, was dieser besonders gut kann, was eine erhöhte Kundenzufriedenheit bewirkt. Dieses System erlaubt darüber hinaus eine weitere Öffnung für Dritte, sodass eine Vielzahl neuer Vertriebspartner in das System einbindbar sind. Aufgrund der Öffnung des Systems, das auf regionale Beschränkungen der einzelnen Vertriebspartner verzichten kann, kommt die neuartige Kommunikationsstruktur vorteilhaft zum Tragen. So kann die zunehmende Anzahl von notwendigen Informationen zielgerichtet und vorausgewählt vom Hersteller den Vertriebspartnern zur Verfügung gestellt werden. Jeder bekommt also nur das, was er braucht, wobei die Informationen jedoch stets auf dem Laufenden sind. Diese komprimierte Datenweitergabe an die Vertriebspartner bietet darüber hinaus den Vorteil, die Weiterleitung von vertraulichen Informationen auf das notwendige Maß zu beschränken, wie beispielsweise den Aufbau und Wirkungsweise bestimmter Komponenten. Ein weiterer Vorteil dieses Systems ist dessen offener Charakter, sodass sich beispielsweise einfacher und schneller neue Vertriebs- und/oder Dienstleistungen integrieren lassen.

In einer bevorzugten Ausführungsform werden die Vertriebs- und/oder Dienstleistungen in die Module 'Vertrieb', 'Service', 'Online-Diestleistung', 'Gebrauchtprodukt' und 'Ersatzteilvertrieb' unterteilt, wobei die Unterteilung nicht alle der aufgeführten Module aufweisen muss bzw. weitere Module denkbar sind. Die Begriffe werden nachfolgend anhand eines Kraftfahrzeugvertriebes beschrieben, ohne dies darauf zu beschränken. Das Vertriebs- und/oder Dienstleistungs-Modul 'Vertrieb' beinhaltet den Vertrieb von Kraftfahrzeugen und gegebenenfalls den Vertrieb von Originalersatzteilen. Das Dienstleistungsmodul 'Service' ermächtigt zur Durchführung von Serviceleistungen, wie Inspektion, Reparatur etc. Gegebenenfalls kann dabei vorgesehen sein, dass bestimmte Reparaturen nur von bestimmten Vertriebspartners vorgenommen werden dürfen, die geeignete Werkzeuge und speziell ausgebildetes Personal besitzen Jedoch kann vorgesehen sein, dass ein Vertriebspartner mit dem Dienstleistungs-Modul 'Service' einen Vermittlungsvertrag mit einem Vertriebspartner mit einem Vertriebs- und/oder Dienstleistungsmodul 'Vertrieb' abschließt und so mit diesem zusammen auch Kraftfahrzeuge vertreiben kann. Das Vertriebs- und/oder Dienstleistungsmodul 'Online-Dienstleistungsvertrag' beinhaltet die physikalische Auslieferung von mit Hilfe elektronischer Medien verkauften Kraftfahrzeugen, was später noch näher erläutert wird. Das Vertriebs- und/oder Dienstleistungsmodul 'Gebrauchtwagenvertrag' beinhaltet den Verkauf von Gebrauchtwagen und das Vertriebs- und/oder Dienstleistungsmodul 'Ersatzteilvertrieb' entsprechend den Vertrieb mit Ersatzteilen. Dabei sei angemerkt, dass ein Vertriebspartner auch mehrere Vertriebs- und/oder Dienstleistungsmodule zugeordnet haben kann. Des weiteren können auch die Produkte zur Unterteilung dienen, sodass beispielsweise der Vertrieb bzw. die damit verbundenen Dienstleistungen von Sportwagen separater Verträge bedürfen.

Es ist jedoch auch denkbar, daß es ein Modul gibt, welches sich ausschließlich auf den Vertrieb von Neufahrzeugen beschränkt. Weiterhin können ausschließliche Ersatzteilmodule und/oder Module, welche ausschließlich Serviceleistungen beinhalten, vorgesehen sein.

In einer weiteren bevorzugten Ausführungsform wird die Anzahl der Vertriebspartner von mindestens einem Vertriebs- und/oder Dienstleistungsmodul durch eine Obergrenze beschränkt. Vorzugsweise sind dies die Vertriebs- und/oder Dienstleistungsmodule 'Vertrieb' und 'Service'.

In einer weiteren bevorzugten Ausführungsform werden die Daten der Ergebnisse jedes Vertriebs- und/oder Dienstleistungsmoduls regional mit Sollwertdaten durch die zentrale Einrichtung elektronisch verglichen. Stellt nun die zentrale Einrichtung in einer Region eine Unterschreitung der Sollwerte fest, so wird für diese Region ein neues Vertriebsund/oder Dienstleistungsmodul ausgeschrieben, falls eine gesetzte Obergrenze für das Vertriebs- und/oder Dienstleistungsmodul noch nicht überschritten ist. Auf diese Ausschreibung können sich dann Dritte oder aber Vertriebspartner bewerben. Es existiert also kein Gebietsschutz mehr, sondern anhand der übermittelten Daten werden Gebiete ermittelt, wo ein Marktpotential nicht ausgeschöpft wird. Unabhängig davon, ob und wie viele Vertriebspartner dort bereits schon ansässig sind, erfolgt dann eine weitere Ausschreibung, um durch einen weiteren Vertriebspartner in der Region das Marktpotential besser auszuschöpfen. Dabei kann sich auch ein bereits in der Region ansässigen Vertriebspartner um dieses Vertriebs- und/oder Dienstleistungsmodul bewerben.

Gemäß einer Erfindung bietet der Hersteller und/oder ein Vertriebspartner die Produkte online über ein offenes Kommunikationsnetzwerk wie beispielsweise das Internet zum Kauf an.

Hierzu stellt die zentrale Einrichtung bzw. eine mit ihr verbundene zentrale elektronische Einrichtung einen Produktkonfigurator elektronisch zur Verfügung, mittels dessen ein Kunde über eine mit der zentralen Einrichtung in Kommunikationsverbindung stehende dezentralen Terminaleinrichtung ein Produkt konfigurieren kann, wobei das fertig konfigurierte Produkt elektronisch abgespeichert und/oder elektronisch reserviert werden kann. Ein Konfigurator für Fahrzeuge ist beispielsweise aus www.volkswagen.de/konfigurator/right.htm (16.07.2001) bekannt. Da die Entscheidungsfindungen von Kunden für ein bestimmtes Produkt höchst unterschiedlich sind, muss dies durch den Konfigurator berücksichtigt werden. Hierzu kann der Konfigurator beispielsweise drei unterschiedliche Wahlmöglichkeiten zum Einstieg in den Konfigurator anbieten.
- Modelle
- Leistungsmerkmale
- Preis.

Weiß der Kunde bereits, für welches Modell er sich interessiert, so kann dieser über eine ihm zugeordnete Terminaleinrichtung das gewünschte Modell aussuchen und wird dann vom Konfigurator automatisch durch ein auf der dezentralen Terminaleinrichtung darstellbares bzw. dargestelltes Menü geführt, in dem dieser beispielsweise in einer oder mehreren Auswahllisten das Modell näher spezifizieren muss. Bei einem Kraftfahrzeug wären dies beispielsweise Ausstattung, Motorleistung und Farbe. Dabei kann bei der Ausstattung vorgesehen sein, dass bestimmte Ausstattungskombinationen vorkonfiguriert sind, um einerseits die Variantenvielfalt beim Hersteller zu reduzieren, als auch die Auswahl für den Kunden im Menü übersichtlicher zu gestalten. Während des Konfigurierens aktualisiert die zentrale Einrichtung mit Hilfe von in ihr abgespeicherten Daten ständig den aktuellen Preis des bisher konfigurierten Produkts, so dass der Kunde eine gute Übersicht hat und gegebenenfalls bestimmte Ausstattungsmerkmale wieder elektronisch streichen kann. Am Ende der Konfiguration kann dann der Kunde das konfigurierte Produkt mit allen Daten elektronisch abspeichern. Ähnlich verläuft die Konfiguration beim Einstieg Leistungsmerkmale oder Preis, wo die zentrale Einrichtung über das Konfigurationsmenü zunächst die Modelle ausweist, die die geforderten Leistungsmerkmale aufweisen, die dann nachfolgend vom Kunden hinsichtlich Farbe etc. weiter elektronisch konfiguriert werden müssen.

In einer weiteren bevorzugten Ausführungsform besteht die Möglichkeit, dass der Kunde sich das fertig konfigurierte Produkt grafisch in Form eines Fotos oder anderer bildlicher Darstellungen auf der dezentralen Terminaleinrichtung durch Abruf der entsprechenden Daten von der zentralen Einrichtung elektronisch anzeigen lassen kann, was insbesondere bei der Auswahl der Farbe eines Kraftfahrzeuges wichtig ist. Prinzipiell können auch einzelne Ausstattungsmerkmale wie beispielsweise ein Schiebedach durch Fotos oder andere bildliche Darstellungen belegt werden, sodass der Kunde stets einen visuellen Eindruck von seinem bisher konfigurierten Kraftfahrzeug hat. Auch die zugehörigen Fotos bzw. bildlichen Darstellungen zu einem konfigurierten Produkt sind elektronisch abspeicherbar, so dass der Kunde zunächst den Dialog zwischen der zentralen Einrichtung und der dezentralen Terminaleinrichtung abbrechen kann, um beispielsweise später das fertig konfigurierte Produkt samt bildlicher Darstellungen jemandem Dritten zu zeigen, um seine endgültige Wahl abzustimmen. Aus diesem Grund ist es auch möglich, verschiedene Varianten von konfigurierten Produkten elektronisch abzuspeichern.

Die Konfigurationsdaten können dabei dezentral auf der Terminaleinrichtung des Kunden oder zentral beim Hersteller bzw. Vertriebspartner elektronisch abgespeichert werden, wobei dann zum späteren Wiederauffinden zusätzliche kundenidentifizierende Daten mit abgespeichert werden müssen. Aus Gründen der Datensicherheit sind diese Daten in der zentralen Einrichtung des Herstellers bzw. Vertriebspartners nur nach einer erfolgten Kundenauthentisierung elektronisch abrufbar.

In einer weiteren bevorzugten Ausfürhrungsform sind zusätzlich in der zentralen Einrichtung Daten im Zusammenhang mit dem Produkt, insbesondere Finanzierungsangebote, Informationen über neue Produkte, Austattungsmerkmale und/oder Zusatzausstattungen elektronisch abgelegt, die über die Terminaleinrichtungen elektronisch abrufbar sind. Dabei können insbesondere die Finanzierungsangebote wieder als Konfigurator mit einer Menüführung, die auf der dezentralen Terminaleinrichtung durch Kommunikation mit der zentralen Einrichtung anzeigbar ist, ausgebildet sein, so dass der Kunde sich über seine Terminaleinrichtung ein komplettes auf ihn zugeschnittenes Finanzierungsangebot elektronisch erstellen lassen kann, das dann zusammen mit den Daten des konfigurierten Produktes elektronisch abgespeichert werden kann.

In einer weiteren bevorzugten Ausführungsform wird dem Kunden auf der dezentralen Terminaleinrichtung durch Kommunikation mit der zentralen Einrichtung ein Angebot zum Testen des von ihm konfigurierten Produktes elektronisch angeboten, wobei der Kunde hierzu eine geografische Bereichsangabe über seine Terminaleinrichtung einzugeben hat, die zentrale Einrichtung aus der geografischen Bereichsangabe mindestens einen Vertriebspartner in oder bei der geografischen Bereichsangabe elektronisch durch Vergleich der erhaltenen Daten mit abgespeicherten Daten elektronisch sucht und die Daten des gefundenen Vertriebspartners an die Terminaleinrichtung des Kunden elektronisch überträgt. Der Kunde kann dann über seine Terminaleinrichtung einen der vorgeschlagenen Vertriebspartner auswählen oder einen bestimmten Vertriebspartner eingeben.

Anschließend wird der Kunde zur Eingabe von Daten in die dezentrale Terminaleinrichtung elektronisch aufgefordert, mit deren Hilfe eine Kontaktaufnahme des Vertriebspartners mit dem Kunden ermöglicht wird, also beispielsweise einen gewünschten Termin, seine E-mail-Adresse und/oder seine Telefonnummer. Nach Empfang dieser Daten überträgt die zentrale Einrichtung die Daten automatisch an den ausgewählten Vertriebspartner und quittiert elektronisch dem Kunden den Empfang.

Erfindungsgemäß wird der Kunde über ein Anzeigebild seiner von ihm genutzten Terminaleinrichtung gefragt, ob er damit einverstanden ist, daß seine Daten an Unternehmensgesellschaften und/oder Partnerunternehmen, für andere Werbezwecke oder nur für dieses eine Vertriebsgeschäft verwendet werden dürfen. Dies geschieht gemäß einer Erfindung, indem auf der Anzeigeeinrichtung mindestens zwei alternative Bedienbutton darstellbar sind, wobei einer der Bedienbutton angeclickt werden muß, um einen Weiterlauf des Systems zu erreichen. Im einfachsten Fall sind auf der Anzeige zwei Bedienbutton "Zustimmung wird gegeben" und "Daten ausschließlich für das Vertriebsgeschäft verwenden" vorgesehen.

In einer weiteren bevorzugten Ausführungsform ist von der dezentralen Terminaleinrichtung des Kunden ein Reservierungswunsch über eine aufgebaute Kommunikationsverbindung an die zentrale Einrichtung elektronisch übertragbar. Anschließend überträgt die zentrale Einrichtung über die Kommunikationsverbindung eine Aufforderung zur Identifizierung an die Terminaleinrichtung des Kunden. Nachdem der Kunde alle erforderlichen Daten über die Terminaleinrichtung eingegeben und diese die Daten an die zentrale Einrichtung elektronisch übertragen hat, wird auf der dezentralen Terminaleinrichtung eine Aufforderung zur Eingabe bzw. Bestätigung eines konfigurierten Produktes durch Datenkommunikation mit der zentralen Einrichtung angezeigt, wobei auch auf die abgespeicherten konfigurierten Produktdaten der vorangegangenen Verfahren zurückgegriffen werden kann. Anschließend wird der Kunde durch entsprechende Anzeigen auf der dezentralen Terminaleinrichtung elektronisch und automatisch aufgefordert, über Eingabe der entsprechenden Daten auf der dezentralen Terminaleinrichtung einen Vertriebspartner zu benennen, bei dem dieser das Produkt abholen möchte und gegebenenfalls den Finanzierungsvertrag unterzeichnen möchte.

In einem weiteren Schritt kann dann der Kunde durch eine entsprechende Anzeige auf der dezentralen Terminaleinrichtung, die durch Datenabruf von der zentralen Einrichtung aufgebaut wird, beispielsweise zur Abgabe eines gewünschten Liefertermins aufgefordert werden, dessen übertragene Daten dann von der zentralen Einrichtung auf Einhaltung automatisch überprüft wird. In einem weiteren Schritt wird der Kunde durch eine entsprechend auf der dezentralen Terminaleinrichtung generierten Anzeige automatisch aufgefordert, eine Reservierungsgebühr zu zahlen. Die zentrale Einrichtung überprüft automatisch den Eingang der Zahlung bzw. den Erhalt der entsprechenden Datenund löst bei erfolgter Zahlung einen Bestellvorgang in der Produktion automatisch elektronisch aus. Die Bezahlung der Reservierungsgebühr kann dabei elektronisch über eine Kreditkarte oder durch eine Überweisung erfolgen. Entsprechende Verfahren sind hinlänglich bekannt. Die Reservierungsgebühr deckt zum einen Verwaltungs- und Transportkosten ab und dient zum anderen als Schutz vor fingierten Bestellungen.

In einem weiteren Schritt wird dann eine Zahlungsaufforderung an den Kunden durch die zentrale Einrichtung übertragen, die über die dezentralen Terminaleinrichtungen abrufbar ist, wobei von der dezentralen Terminaleinrichtung durch Kommunikationsverbindung mit der zentralen Einrichtung dem Kunden eine oder mehrere Zahlungsart angeboten wird, durch Dateneingabe in die dezentrale Terminaleinrichtung wählt der Kunde eine Zahlungsart aus, deren Daten von der dezentralen Terminaleinrichtung an die zentrale Einrichtung automatisch übertragen werden. Dabei sind auch zuvor gespeicherte Finanzierungsanträge übertragbar. Der Empfang der Daten wird von der zentralen Einrichtung an die dezentrale Terminaleinrichtung des Kunden automatisch quittiert. Des weiteren werden von der zentralen Einrichtung Daten elektronisch mitgeteilt, wo und wann der Kunde den Kaufvertrag unterzeichnen und das Produkt abholen kann. Ebenso wie der Abschluss des Kaufvertrages erst beim Vertriebspartner erfolgt, wird auch der Finanzierungsvertrag beim Vertriebshändler unterzeichnet. Um zu verhindern, dass die Reservierungsgebühr verfällt, weil beispielsweise der Finanzierungsvertrag nicht zustande kommt, kann durch entsprechende Dateneingabe in die Terminaleinrichtung und elektronische Datenübertragung an die zentrale Einrichtung vereinbart werden, dass die Bestellung bei der Produktion bzw. die Auslieferung zum Vertriebspartner erst erfolgt, wenn der Finanzierungsantrag durch eine Bank genehmigt wurde.

Zum Abschluß eines Kaufvertrages und eventuell auch eines Finanzierungsvertrages ist also ein persönliches Treffen zwischen dem Kunden und dem Verkäufer, gegebenenfalls vertreten durch einen ausliefernden Händler, notwendig, wobei dem Kunden vorzugsweise das von ihm reservierte Produkt vorgestellt wird. Handelt es sich dabei um ein Fahrzeug, kann auch eine Testfahrt vorgesehen sein.

Die Erfindung wird nachfolgend anhand eines bevorzugten Ausführungsbeispiels näher erläutert: Die Fig. zeigen:
- Fig. 1: ein Schemata eines Vertriebssystems,
- Fig. 2: ein schematisches Blockschaltbild der einzelnen Vertriebspartner,
- Fig. 3: ein Flussdiagramm eines online-Kaufes bei Barzahlung bzw. Überweisung und
- Fig. 4: ein Flussdiagramm eines online-Kaufes mit Finanzierung.

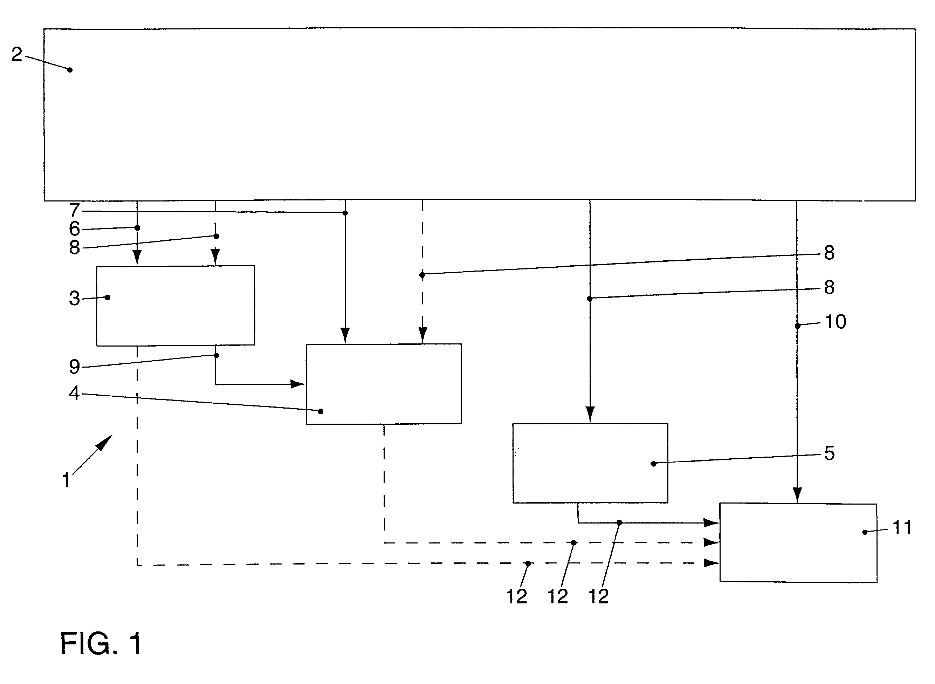

In der Fig. 1 ist ein Schemata eines Vertriebssystems und damit verbundener Dienstleistungen dargestellt. Das Vertriebssystem 1 umfasst mindestens einen Hersteller 2 und verschiedene Vertriebspartner 3-5. Die im System benötigten Dienstleistungen sind in Vertriebs- und/oder Dienstleistungsmodule unterteilt, wobei jeder Vertriebspartner mit dem Hersteller einen Vertrag über mindestens ein Vertriebsund/oder Dienstleistungsmodul abschließt. Zum besseren Verständnis wird das Vertriebssystem 1 anhand eines Kraftfahrzeug-Vertriebssystems genauer beschrieben. Bei den Vertriebspartnern 3 handelt es sich um Vertragshändler, die mit dem Hersteller 2 einen Vertragshändlervertrag 6 abschließen. Bei den Vertriebspartnern 4 handelt es sich um Servicepartner, die mit dem Hersteller einen Servicepartnervertrag 7 abschließen Bei den Vertriebspartnern 5 handelt es sich um Online-Dienstleister, die mit dem Hersteller 2 einen Online-Dienstleistungsvertrag 8 abschließen. Auch die Vertragshändler oder Servicepartner können einen Online-Dienstleistungsvertrag 8 abschließen.

Normalerweise findet der übliche Vertrieb der Kraftfahrzeuge über die Vertragshändler statt. Dieses Grundprinzip erfährt nun zwei Durchbrechungen. Zum einen kann ein Servicepartner mit einem Vertragshändler einen Neufahrzeugvermittlungsvertrag 9 abschließen. In diesem Fall darf dann der Servicepartner auch Kraftfahrzeuge vertreiben, wobei die Kontrolle beim Vertriebshändler bleibt. Die zweite Durchbrechung ist der Direktverkauf 10 des Herstellers 2 an Großkunden und Online-Kunden 11, wobei sich der Hersteller 2 bei der Auslieferung 12 der Online-Dienstleister bedient, was später noch näher erläutert wird. Dabei kann der Online-Dienstleister auch beispielsweise ein Supermarkt sein. Weitere mögliche Unterteilungen der Dienstleistungen sind beispielsweise das Ersatzteilgeschäft und Gebrauchtwagenverträge.

Das Grundprinzip des Vertriebssystems mit seinen Vorteilen lässt sich kurz wie folgt beschreiben.

Der Hersteller sucht für die jeweilige Leistung die Partner heraus, die zu ihrer Erbringung am geeignetsten erscheinen. Ersatzteile können z.B. auch von Tankstellen verkauft werden. Auslieferungen von Online-Verkäufen könnten auch von Dienstleistern durchgeführt werden, die ansonsten mit dem Automobilgeschäft nichts zu tun haben. Das neue Geschäftsmodell bringt dem Hersteller die Möglichkeit, sich für die unterschiedlichen Geschäfte diejenigen Partner zu suchen, die das jeweilige Geschäft am besten beherrschen. Den Vertriebspartnern bringt es den Vorteil, dass sie nur diejenigen Geschäfte erledigen müssen, die sie wirkliche beherrschen und für die sie eine ausreichende Infrastruktur zur Verfügung haben. Investitionen müssen, wenn überhaupt, nur für das jeweilige Kerngeschäft getätigt werden. Für die Endkunden bringt die Struktur den Vorteil, dass sie vom jeweiligen Fachmann stets optimal bedient werden und dass die Dienstleistungen aller Voraussicht nach auch günstiger erbracht werden können. Denn wer gut Autos reparieren kann, muss noch lange kein ebenso guter Neuwagenverkäufer sein. Um die von der Automobilindustrie favorisierte Selektivität zum Zwecke der Qualitätskontrolle dennoch wahren zu können, wird die Anzahl der im jeweiligen Markt tätigen Vertriebspartner auf eine Höchstzahl begrenzt. Die Orte, an denen diese Partner angesiedelt sind, werden in Übereinstimmung mit dem Hersteller festgelegt. Die Partner können jedoch von ihrem Standort aus das Geschäft im ganzen Land betreiben.

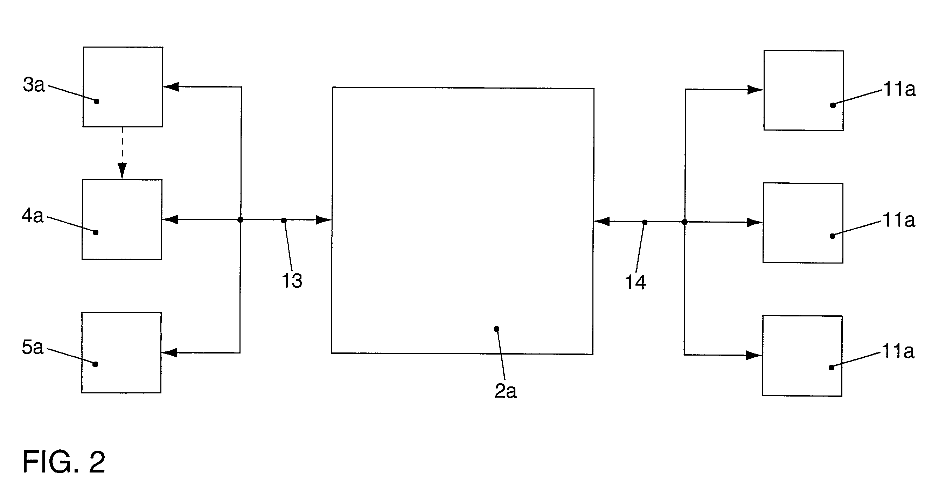

In der Fig. 2 ist schematisch die Hardwarestruktur des Vertriebssystems 1 dargestellt. Dabei ist der Hersteller 2 über ein Intranet 13 mit entsprechenden Terminaleinrichtungen der Vertriebspartner 3-5 verbunden und über ein Kommunikationssystem 14 wie beispielsweise das Intranet, von dezentralen Terminaleinrichtungen von Groß- und Online-Kunden 11 erreichbar. Anstelle eines Intranets 13 können der Hersteller 2 und die Vertriebspartner auch über ein offenes Kommunikationssystem, wie beispielsweise das Internet verbunden sein. Der Aufbau von Kommunikationsverbindungen über andere Kommunikationsnetzwerke und -systeme ist denkbar. Des weiteren kann auch vorgesehen sein, dass die Vertriebspartner 3-5 untereinander elektronisch vernetzt sind.

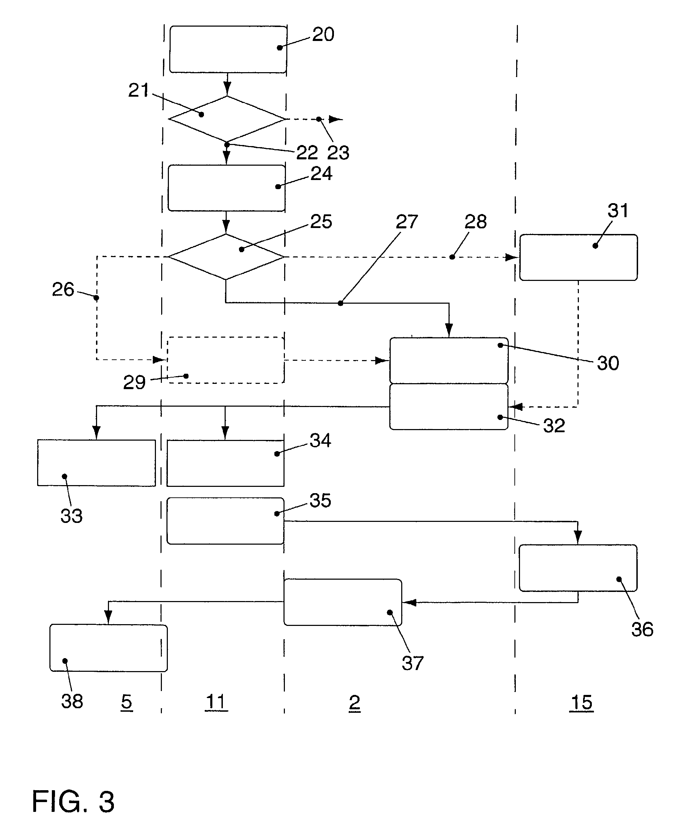

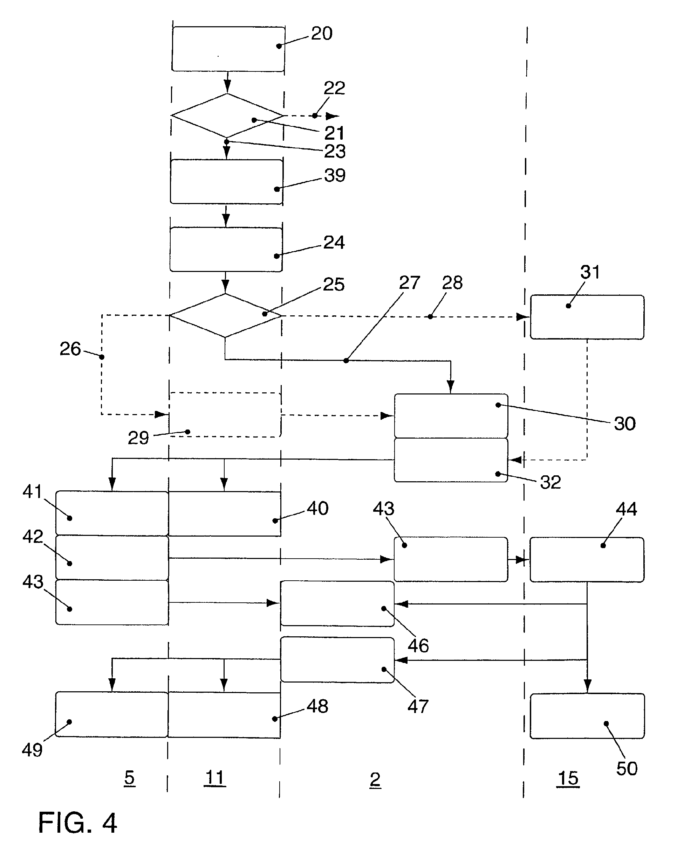

In der Fig. 3 ist ein vereinfachtes Flussdiagramm eines Online-Kaufes mit Bezahlung bzw. Überweisung dargestellt. In einem ersten Schritt 20 konfiguriert der Kunde 11 ein gewünschtes Kraftfahrzeug mittels eines von der zentralen Einrichtung 2a vom Hersteller 2 zur Verfügung gestellten Konfigurators, der auf einer mit der zentralen Einrichtung in Kommunikationsverbindung stehenden Terminaleinrichtung 11a darstellbar ist. Nach Abschluss der Konfiguration wird auf der dezentralen Terminaleinrichtung 11a des Kunden 11 im Verfahrensschritt 21 eine Abfrage dargestellt, ob der Kunde 11 das Fahrzeug durch Barzahlung/Überweisung 22 oder über eine Finanzierung 23 bezahlen möchte. Die Finanzierung wird später in Fig. 4 erläutert. Hat sich der Kunde 11 für Barzahlung/Überweisung 22 entschieden, so wird er in Schritt 24 zur Eingabe seiner persönlichen Daten inklusive Anschrift und Geburtsdatum durch ein auf der dezentralen Terminaleinrichtung 11a dargestelltes Menübild aufgefordert. Sind die Angabedaten vollständig an die zentrale Einrichtung 2a des Herstellers 2 elektronisch übermittelt worden, so wird der Kunde 11 in Schritt 25 durch ein weiteres Menübild auf der dezentralen Terminaleinrichtung 11a zur Bezahlung einer Reservierungsgebühr aufgefordert. Diese kann der Kunde 11 beispielsweise durch ein M-Payment 26 auf der Website, durch Zahlung mit Kreditkarte 27 auf der Website oder durch eine Überweisung bei einer Bank 15 bzw. durch eine Einzugsermächtigung online 28 vornehmen. Die Auswahl der gewünschten Zahlungsart erfolgt im Ausführungsbeispiel durch Anclicken eines entsprechenden Auswahlbuttons. Entsprechende Verfahren sind allgemein bekannt. Wurde der Anwahlbutton M-Payment betätigt, erschein in einem Schritt 29 auf der dezentralen Terminaleinrichtung 11 a ein Menübild, durch das der Kunde 11 dazu aufgefordert wird, seine M-Payment-Daten einzugeben, so dass in einem Schritt 30 der Zahlungsprozess eingeleitet werden kann. Gleiches gilt sinngemäß für die Bezahlung mit Kreditkarte. Bei der Überweisung bzw. Einzugsermächtigung 28 muss hingegen die Bank 15 in einem Schritt 31 den Eingang der Zahlung überprüfen. Die Bezahlung der Reservierungsgebühr löst dann automatisch in einem Schritt 32 den Transport des Kraftfahrzeuges vom Hersteller 2 an den vom Kunden ausgesuchten Online-Dienstleister 5 aus. Über den ausgelösten Transport des Kraftfahrzeuges werden der Online-Dienstleister 5 und der Kunde 11 über die ihnen zugeordneten dezentralen Terminaleinrichtungen 5a bzw. 11a in einem Schritt 33 bzw. 34 informiert, wobei die Benachrichtigung beispielsweise per E-mail erfolgt. In der Benachrichtigung wird dem Kunden mitgeteilt, wann dieser bei dem Online-Dienstleister 5 den Kaufvertrag unterschreiben und das Kraftfahrzeug in Empfang nehmen kann. Des weiteren wird der Kunde 11 in einem Schritt 35 aufgefordert, den Kaufpreis zu bezahlen. Die Bank 15 überprüft in einem Schritt 36 den Eingang der Zahlung und teilt dies per E-mail dem Hersteller 2 mit, der diese Information an den Online-Dienstleister 5 weiterleitet. Im Schritt 37 wird dann der Kaufvertrag vom Kunden beim Online-Dienstleister 5 abgeschlossen und das Fahrzeug übergeben, wobei jedoch der Hersteller 2 und nicht der Online-Dienstleister der Vertragspartner ist.

In der Fig. 4 ist das Flussdiagramm für einen Online-Kauf mit Finanzierung dargestellt, wobei gleiche Schritte wie in Fig. 3 mit gleichen Bezugszeichen versehen sind. In einem Schritt 39 wird durch die zentrale Einrichtung 2a in Zusammenwirken mit der dem Kunden zugeordneten dezentralen Terminaleinrichtung 11a eine Finanzierungskalkulation online durchgeführt. Hat sich der Kunde 11 für eine Wunsch-Finanzierung beispielsweise durch Anclicken eines auf der dezentralen Terminaleinrichtung 11a dargestellten Auswahlbuttons entschieden, so wird dieser über ein auf der dezentralen Terminaleinrichtung dargestelltes Auswahlmenü in Schritt 24 wieder nach seinen persönlichen Angaben gefragt. Anschließend wird in Schritt 25 der Kunde 11 zur Zahlung der Reservierungsgebühr aufgefordert, sodass hierzu auf Fig. 3 verwiesen werden kann. Um den Finanzierungsantrag jedoch prüfen zu können, benötigt die Bank 15 (zumindest für Deutschland) eine Schufa-Auskunft. Daher wird der Kunde im Schritt 40 elektronisch über seine mit der zentralen Einrichtung 2a in Kommunikationsverbindung stehende Terminaleinrichtung 11a darüber informiert, dass dieser beim Online-Dienstleister 5 eine Schufa-Auskunft unterschreiben muss und sich zusätzlich ausweisen muss. Hierzu wird der Kunde 11 über einen auf der Terminaleinrichtung dargestellten Menüpunkt nach einem Terminwunsch gefragt und dieser beispielsweise elektronisch mit dem Online-Dienstleister 5 abgestimmt, der in einem Schritt 41 schon die Papiere für die Schufa vorbereiten kann. In einem persönlichen Gespräch vor Ort muss dann in einem Schritt 42 der Kunde 11 die Schufa-Unterschrift leisten und sich ausweisen. Die Schufa-Unterlagen und Kopien der Ausweispapiere werden dann beispielsweise per E-mail oder Telefax an den Hersteller 2 übertragen und von diesem in Schritt 43 abgespeichert und an die Bank 15 übertragen. In Schritt 44 prüft die Bank 15 die Kreditwürdigkeit. In Schritt 45 wird der Finanzierungsund Kaufvertrag unterzeichnet und im Schritt 46 zur Hinterlegung der unterzeichnete Kaufvertrag an den Hersteller Z sowie der Finanzierungsvertrag an die Bank versendet. Verläuft die Prüfung durch die Bank 15 positiv, so teilt diese elektronisch dies dem Hersteller 2 mit, der dann in Schritt 47 Kunden 11 und Online-Dienstleister 5 darüber informiert. Der Online-Dienstleister übergibt dem Kunden im Schritt 49 das Fahrzeug, sobald die Kundenangaben im Finanzierungsantrag durch die Bank überprüft (Schritt 48) und der Finanzierungsbetrag an den Verkäufer ausgezahlt ist (Schritt 50).

## Patentansprüche

1. Verfahren zum Vertrieb und/oder zur Durchführung damit verbundener Dienstleistungen von Produkten, insbesondere von Kraftfahrzeugen, umfassend mindestens einen Hersteller (2) des Produktes und eine Anzahl von Vertriebspartnern (3-5) des Herstellers (2), mittels mindestens eines Kommunikationsnetzwerkes (13) zwischen dem Hersteller (2) und den einzelnen Vertriebspartnern (3-5), wobei die Vertriebs- und/oder Dienstleistungen modular aufgeteilt sind und den einzelnen Vertriebspartnern (3-5) mindestens ein Vertriebs- und/oder Dienstleistungsmodul zugeordnet ist, wobei die den einzelnen Vertriebspartnern (3-5) zugeordneten Vertriebs- und/oder Dienstleistungsmodule auf einer dem Hersteller (2) zugeordneten zentralen elektronischen Einrichtung (2a) elektronisch abgelegt sind, die zentrale Einrichtung (2a) in Abhängigkeit von dem zugeordneten Vertriebs- und/oder Dienstleistungsmodul den Vertriebspartner (3-5) über das Kommunikationsnetzwerk (13) Daten zu dezentralen Terminaleinrichtungen (3a-5a) elektronisch überträgt und von diesen Daten zu durchgeführten Vertriebsund/oder Dienstleistungen erhält, wobei in der zentralen Einrichtung (2a) die übertragenen Daten der durchgeführten Vertriebs- und/oder Dienstleistungen mit Sollvorgaben des jeweiligen Vertriebs- und/oder Dienstleistungsmoduls elektronisch verglichen werden.

2. Verfahren nach Anspruch 1, **dadurch gekennzeichnet, dass** die Vertriebsund/oder Dienstleistungsmodule mindestens eine der nachfolgenden Vertriebsund/oder Dienstleistungen umfassen:
- Produktvertrieb (6)
- Service (7)
- Online-Dienstleistung oder
- Ersatzteilvertrieb.

3. Verfahren nach Anspruch 1 oder 2, **dadurch gekennzeichnet, dass** die Anzahl einzelner Vertriebspartner (3-5) für mindestens eines der Vertriebs- und/oder Dienstleistungsmodule durch eine Obergrenze beschränkt ist.

4. Verfahren nach Anspruch 3, **dadurch gekennzeichnet, dass** die zentrale elektronische Einrichtung (2a) die Ergebnisdaten der Vertriebs- und/oder Dienstleistungsmodule regional mit Sollwerten elektronisch vergleicht und bei Unterschreitung der Sollwerte regional ein Vertriebs- und/oder Dienstleistungsmodul für diese Region elektronisch ausschreibt, falls eine gesetzte Obergrenze noch nicht überschritten ist.

5. Verfahren nach einem der vorangegangenen Ansprüche, **dadurch gekennzeichnet, dass** der Hersteller (2) und/oder ein Vertriebspartner (3-5) die Produkte elektronisch über ein offenes Kommunikationsnetzwerk (14) zum Kauf anbietet.

6. Verfahren nach Anspruch 5, **dadurch gekennzeichnet, dass** eine zentrale Einrichtung (2a) des Anbieters einen Produkt-Konfigurator elektronisch zur Verfügung stellt, mittels dessen ein Kunde (11) ein Produkt über eine dezentrale Terminaleinrichtung (11a) elektronisch konfigurieren kann, wobei das fertig konfigurierte Produkt elektronisch abgespeichert und/oder reserviert werden kann.

7. Verfahren nach Anspruch 6, **dadurch gekennzeichnet, dass** der Kunde (11) über die dezentralen Terminaleinrichtungen (11a) mindestens nach abgeschlossener Konfiguration des Produktes die Daten einer Darstellung des Produktes von der zentralen Einrichtung aufrufen kann, wobei die Daten der Darstellung mit den Daten der Konfiguration des Produktes elektronisch abspeicherbar sind.

8. Verfahren nach Anspruch 6 oder 7, **dadurch gekennzeichnet, dass** das konfigurierte Produkt in der zentralen Einrichtung (2a) und/oder den dezentralen Terminaleinrichtungen (11 a) elektronisch abgespeichert wird.

9. Verfahren nach Anspruch 8, **dadurch gekennzeichnet, dass** in der zentralen Einrichtung (2a) abgespeicherte Produktkonfigurationsdaten zusätzliche kundenidentifizierende Daten umfassen.

10. Verfahren nach Anspruch 9, **dadurch gekennzeichnet, dass** mindestens die kundenidentifizierenden Daten in der zentralen Einrichtung (2a) von den dezentralen Terminaleinrichtungen (11a) nur über eine Kundenauthentisierung elektronisch abrufbar sind.

11. Verfahren nach einem der Ansprüche 5 bis 10, **dadurch gekennzeichnet, dass** in der zentralen Einrichtung (2a) Informationendaten im Zusammenhang mit dem Produkt, insbesondere Finanzierungsangebote, Informationen über neue Produkte, Ausstattungsmerkmale und/oder Zusatzausstattungen elektronisch abgelegt sind, die über eine aufbaubare Kommunikationsverbindung (14) von den Terminaleinrichtungen (11a) elektronisch abrufbar sind.

12. Verfahren nach einem der Ansprüche 6 bis 11, **dadurch gekennzeichnet, dass** dem Kunden (11) das von ihm konfigurierte Produkt zum Testen von der zentralen Einrichtung (2a) über die dezentrale Terminaleinrichtung (11a) elektronisch angeboten wird, wobei der Kunde (11) hierzu Daten einer geografische Bereichsangabe einzugeben hat, die zentrale Einrichtung (2a) die Daten mit abgespeicherten geografischen Bereichsangabedaten der Vertriebspartner (3-5) elektronisch vergleicht und in Abhängigkeit des Vergleiches einen Vertriebspartner (3-5) in oder bei der geografischen Bereichsangabe elektronisch ermittelt und die Daten des gefundenen Vertriebspartners (3-5) an die dezentrale Terminaleinrichtung (11a) des Kunden (11) elektronisch überträgt.

13. Verfahren nach einem der Ansprüche 6 bis 12, **dadurch gekennzeichnet, dass** dem Kunden (11) das von ihm konfigurierte Produkt auf der dezentralen Terminaleinrichtung (11a) elektronisch zum Testen angeboten wird, wobei der Kunde (11) über die dezentrale Terminaleinrichtung (11a) die Daten eines gewünschten Vertriebspartners (3-5) an die zentrale Einrichtung (2a) elektronisch senden kann, bei dem dieser das Produkt testen möchte.

14. Verfahren nach Anspruch 12 oder 13, **dadurch gekennzeichnet, dass** der Kunde von der zentralen Einrichtung (2a) über die dezentrale Terminaleinrichtung (11a) zur Eingabe von Daten elektronisch aufgefordert wird, mittels derer eine Kontaktaufnahme des Vertriebspartners (3-5) mit dem Kunden ermöglicht wird.

15. Verfahren nach einem der Ansprüche 5 bis 14, **dadurch gekennzeichnet, dass** über die Terminaleinrichtungen (11a) ein Bestellwunsch übertragen wird.

16. Verfahren nach Anspruch 15, **dadurch gekennzeichnet, dass** die zentrale Einrichtung (2a) an die mit ihr in Kommunikationsverbindung stehende Terminaleinrichtung (11a) eine Aufforderung zur Identifizierung elektronisch überträgt sowie nach erfolgter Identifizierung eine Aufforderung zur Angabe des Produktes elektronisch überträgt.

17. Verfahren nach Anspruch 16, **dadurch gekennzeichnet, dass** die zentrale Einrichtung (2a) Daten einer Aufforderung zur Benennung eines Vertriebspartners (3-5) an die mit ihr in Kommunikationsverbindung stehende Terminaleinrichtung (11a) elektronisch überträgt, bei dem der Kunde (11) den Kaufvertrag und gegebenenfalls einen Finanzierungsvertrag unterzeichnen möchte.

18. Verfahren nach einem der Ansprüche 15 bis 17, **dadurch gekennzeichnet, dass** die zentrale Einrichtung (2a) eine Zahlungsaufforderung einer Reservierungsgebühr an die mit ihr in Kommunikationsverbindung stehende dezentrale Terminaleinrichtung (11a) elektronisch überträgt, die zentrale Einrichtung (2a) den Eingang der Zahlung elektronisch überprüft und bei Eingang der Zahlung einen Bestellvorgang beim Hersteller (2) für das gewählte Produkt elektronisch vornimmt.

19. Verfahren nach einem der Ansprüche 15 bis 18, **dadurch gekennzeichnet, dass** die zentrale Einrichtung (2a) eine Zahlungsaufforderung für das Produkt an die mit ihr in Kommunikationsverbindung stehende Terminaleinrichtung (11a) des Kunden (11) elektronisch überträgt, wobei der Kunde (11) Daten einer Zahlungsart über die dezentrale Terminaleinrichtung (11a) an die zentrale Einrichtung (2a) elektronisch überträgt.

20. Verfahren nach Anspruch 19, **dadurch gekennzeichnet, dass** die zentrale Einrichtung (2a) die empfangenen Daten an die dezentrale Terminaleinrichtung (11a) elektronisch bestätigt, den Eingang der Zahlung oder eines Finanzierungsvertrages elektronisch überprüft und dem Kunden (11) eine Datennachricht übermittelt, wo und wann dieser den Kaufvertrag unterzeichnen und das Produkt in Empfang nehmen kann.

21. Vorrichtung zum Vertrieb und/oder damit verbundener Dienstleistungen von Produkten, insbesondere von Kraftfahrzeugen, umfassend mindestens eine zentrale elektronische Einrichtung (2a) mindestens eines Herstellers (2) eines der Produkte, die mit einer Vielzahl von dezentralen elektronischen Terminaleinrichtungen (3a-5a) von Vertriebspartnern (3-5) des Herstellers über eine Kommunikationsstrecke elektronisch verbindbar sind, wobei der Vertrieb und/oder die Dienstleistungen modular aufgeteilt sind und den Vertriebspartnern mindestens ein Vertriebs- und/oder Dienstleistungsmodul zugeordnet ist, wobei die Zuordnung der Vertriebs- und/oder Dienstleistungsmodule in der zentralen Einrichtung (2a) des Herstellers (2) elektronisch abgelegt sind und die zentrale Einrichtung (2a) in Abhängigkeit von dem zugeordneten Vertriebs- und/oder Dienstleistungsmodul über die aufbaubare elektronische Kommunikationsstrecke (13) den dezentralen Terminaleinrichtungen (3a-5a) der Vertriebspartner (3-5) automatisch und/oder auf Abruf Daten überträgt und von diesen Daten zu durchgeführten Vertriebs- und/oder Dienstleistungen erhält, wobei in der zentralen Einrichtung (2a) die übertragenen Daten der durchgeführten Vertriebsund/oder Dienstleistungen mit Solldaten des jeweiligen Vertriebs- und/oder Dienstleistungsmoduls elektronisch vergleichbar ist oder verglichen werden.

22. Vorrichtung nach Anspruch 21, **dadurch gekennzeichnet, dass** die Vertriebsund/oder Dienstleistungsmodule mindestens eins der nachfolgenden Module umfassen:
- Produktvertrieb (6)
- Service (7)
- Online-Dienstleistung (8) oder
- Ersatzteilvertrieb.

23. Vorrichtung nach Anspruch 21 und 22, **dadurch gekennzeichnet, dass** die Anzahl einzelner Vertriebspartner (3-5) für mindestens eines der Vertriebs- und/oder Dienstleistungsmodule durch eine Obergrenze beschränkt ist.

24. Vorrichtung nach Anspruch 23, **dadurch gekennzeichnet, dass** über die zentrale elektronische Einrichtung (2a) die Ergebnisse jedes Vertriebs- und/oder Dienstleistungsmoduls regional mit Sollwerten vergleichbar sind und bei Unterschreitung der regionalen Sollwerte ein Vertriebs- und/oder Dienstleistungsmodul für diese Region ausgeschrieben wird, falls eine gesetzte Obergrenze für das Vertriebs- und/oder Dienstleistungsmodul noch nicht überschritten ist.

25. Vorrichtung nach einem der vorangegangenen Ansprüche, **dadurch gekennzeichnet, dass** die Vorrichtung mindestens eine zentrale elektronische Einrichtung (2a) umfasst, die über ein offenes Kommunikationsnetzwerk (14) mit dezentralen Terminaleinrichtungen (11a) von Kunden verbindbar ist, wobei von den dezentralen Terminaleinrichtungen (11a) Daten zur Bestellung von Produkten des mindestens einen Herstellers an die zentrale elektronische Einrichtung (2a) über eine aufbaubare Kommunikationsstrecke (14) sendbar sind und/oder gesendet werden und die zentrale Einrichtung (2a) die Daten der Bestellung automatisch verarbeitet..

26. Vorrichtung nach Anspruch 25, **dadurch gekennzeichnet, dass** in der zentralen Einrichtung (2a) Produktdaten hinterlegt sind, aus denen über die dezentralen Terminaleinrichtungen (11a) ein Produkt elektronisch konfigurierbar ist, wobei die Daten des konfigurierten Produktes in der zentralen Einrichtung (2a) elektronisch abspeicherbar und/oder reservierbar sind.

27. Vorrichtung nach Anspruch 26, **dadurch gekennzeichnet, dass** in der zentralen Einrichtung (2a) Daten von Darstellungen der verschiedenen Produkte abgelegt sind, die von den dezentralen Terminaleinrichtungen (11a) elektronisch abrufbar und zu einem konfigurierten Produkt abspeicherbar sind.

28. Vorrichtung nach Anspruch 26 oder 27, **dadurch gekennzeichnet, dass** die Daten des konfigurierten Produktes in der zentralen Einrichtung (2a) und/oder der mit der zentralen Einrichtung in Kommunikationsverbindung (14) stehenden Terminaleinrichtung (11a) abspeicherbar sind.

29. Vorrichtung nach Anspruch 28, **dadurch gekennzeichnet, dass** in der zentralen Einrichtung (2a) zusätzlich kundenidentifizierende Daten zu den konfigurierenden Produktdaten elektronisch ablegbar sind.

30. Vorrichtung nach Anspruch 29, **dadurch gekennzeichnet, dass** von der zentralen Einrichtung (2a) eine Kundenauthentisierung durchführbar ist, bevor die konfigurierten Produktdaten und die kundenidentifizierenden Daten von der zentralen Einrichtung (2a) abrufbar sind.

31. Vorrichtung nach einem der Ansprüche 25 bis 30, **dadurch gekennzeichnet, dass** in der zentralen Einrichtung (2a) Daten im Zusammenhang mit dem Produkt, insbesondere Finanzierungsangebote, Informationen über neue Produkte, Ausstattungsmerkmale und/oder Zusatzausstattungen abgelegt sind, die über die Terminaleinrichtungen (11a) elektronisch abrufbar sind.

32. Vorrichtung nach einem der Ansprüche 26 bis 31, **dadurch gekennzeichnet, dass** von der zentralen Einrichtung (2a) an die Terminaleinrichtungen (11a) eine Abfrage elektronisch übertragbar ist, ob der Kunde (11) das konfigurierte Produkt testen möchte, wobei über die Terminaleinrichtungen (11a) eine geografische Bereichsangabe eingebbar und an die zentrale Einrichtung (2a) übertragbar ist, von der zentralen Einrichtung (2a) aus der geografischen Bereichsangabe ein Vertriebspartner (3-5) in oder bei der geografischen Bereichsangabe ermittelbar und die Daten des ermittelten Vertriebspartners (3-5) an die dezentrale Terminaleinrichtung (11a) elektronisch übertragbar sind.

33. Vorrichtung nach einem der Ansprüche 26 bis 32, **dadurch gekennzeichnet, dass** von der zentralen Einrichtung (2a) an die Terminaleinrichtungen (11a) eine Abfrage elektronisch übertragbar ist, ob der Kunde (11) das konfigurierte Produkt testen möchte, wobei über die dezentralen Terminaleinrichtungen (11a) die Daten eines Vertriebspartner (3-5) eingebbar und an die zentrale Einrichtung (2a) elektronisch übertragbar sind, bei dem der Kunde (11) das Produkt zu testen wünscht.

34. Vorrichtung nach Anspruch 32 oder 33, **dadurch gekennzeichnet, dass** von der zentralen Einrichtung (2a) eine Eingabeaufforderung elektronisch generierbar und an die Terminaleinrichtungen (11a) elektronisch übertragbar ist, mittels derer der Kunde (11) zur Eingabe von Daten aufgefordert wird, mittels derer eine Kontaktaufnahme des Vertriebspartners (3-5) mit dem Kunden ermöglicht wird.

35. Vorrichtung nach einem der Ansprüche 25 bis 34, **dadurch gekennzeichnet, dass** über die Terminaleinrichtungen (11a) ein Bestellwunsch elektronisch an die zentrale Einrichtung (2a) übertragbar ist.

36. Vorrichtung nach Anspruch 35, **dadurch gekennzeichnet, dass** von der zentralen Einrichtung (2a) eine Aufforderung zur Identifizierung an die Terminaleinrichtungen (11 a) elektronisch übertragbar ist, die Identifizierungsdaten von den Terminaleinrichtungen (11a) an die zentrale Einrichtung (2a) elektronisch übertragbar sind und nach erfolgter Identifizierung eine Aufforderung zur Angabe des Produktes von der zentralen Einrichtung (2a) an die Terminaleinrichtungen (11a) über eine aufbaubare Kommunikationsstrecke elektronisch übertragbar ist.

37. Vorrichtung nach Anspruch 36, **dadurch gekennzeichnet, dass** über die zentrale Einrichtung (2a) eine Aufforderung zur Benennung eines Vertriebspartners (3-5) elektronisch übertragbar ist, bei dem der Kunde (11) den Kaufvertrag und gegebenenfalls einen Finanzierungsvertrag unterzeichnen möchte.

38. Vorrichtung nach einem der Ansprüche 35 bis 37, **dadurch gekennzeichnet, dass** von der zentralen Einrichtung (2a) Daten einer Zahlungsaufforderung einer Reservierungsgebühr an die Terminaleinrichtungen (11a) elektronisch übertragbar sind und bei Eingang der Zahlung durch die zentrale Einrichtung (2a) ein Bestellvorgang an den Hersteller (2) des Produktes elektronisch übertragbar ist.

39. Vorrichtung nach einem der Ansprüche 35 bis 38, **dadurch gekennzeichnet, dass** von der zentralen Einrichtung (2a) eine Zahlungsaufforderung für das Produkt über eine aufbaubare Kommunikationsverbindung (14) an die Terminaleinrichtungen (11a) elektronisch übertragbar ist, über die Terminaleinrichtungen (11a) eine Zahlungsart eingebbar ist und an die zentrale Einrichtung (2a) übertragbar ist.

40. Vorrichtung nach Anspruch 39, **dadurch gekennzeichnet, dass** von der zentralen Einrichtung (2a) eine Empfangsbestätigung über die empfangenen Daten an die Terminaleinrichtungen (11a) elektronisch übertragbar ist, der Eingang der Zahlung oder eines Finanzierungsantrages elektronisch überprüfbar ist und eine Datennachricht an die Terminaleinrichtungen (11a) elektronisch übertragbar ist, wo und wann der Kunde (11) den Kaufvertrag unterzeichnen und das Produkt in Empfang nehmen kann.

41. Computerprogramm mit Programmcode-Mitteln, um alle Schritte von jedem beliebigen der Ansprüche 1 bis 20 durchzuführen, wenn das Programm in einer zentralen Einrichtung (2a) ausgeführt wird.

42. Computerprogrammprodukt mit Programmcode-Mitteln, die auf einem computerlesbaren Datenträger gespeichert sind, um das Verfahren nach jedem beliebigen der Ansprüche 1 bis 20 durchzuführen, wenn das Programmprodukt in einer zentralen Einrichtung (2a) ausgeführt wird.
